# EUROPÄISCHE PATENTSCHRIFT

(11) **EP 1 025 059 B1**
(45) Veröffentlichungstag und Bekanntmachung des Hinweises auf die Patenterteilung: **13.02.2002**
(21) Anmeldenummer: 98940108.8
(22) Anmeldetag: 01.07.1998
(51) Int. Cl.: C04B 7/32

(54) **VERFAHREN ZUR HERSTELLUNG VON TONERDEZEMENT**
METHOD FOR MAKING ALUMINOUS CEMENT
PROCEDE DE FABRICATION DE CIMENT ALUMINEUX

(30) Priorität: 01.07.1997 DE 19727979
(43) Veröffentlichungstag der Anmeldung: 09.08.2000
(73) Patentinhaber: Readymix Zement GmbH, 40880 Ratingen (DE)
(72) Erfinder: OBERSTE-PADTBERG, Rüdiger, D-42111 Wuppertal (DE); MOTZET, Hubert, D-06188 Peissen (DE); OPITZ, Dieter, D-40885 Ratingen (DE)
(74) Vertreter: Cohausz & Florack Patentanwälte
(86) Internationale Anmeldenummer: EP9804070
(87) Internationale Veröffentlichungsnummer: WO9901395

(56) Entgegenhaltungen:
- FR-A- 2 656 862
- FR-A- 2 748 271
- GB-A- 1 371 156
- GB-A- 1 520 186
- GB-A- 2 032 907

## Beschreibung

Die Erfindung betrifft ein Verfahren zur Herstellung von eisenhaltigem Tonerdezement.

Tonerdezemente sind hydraulische Bindemittel, die in der Hauptsache aus Tonerde, Al₂O₃, und Kalk, CaO, bestehen. Daneben enthält dieses Bindemittel unterschiedliche Mengen an Eisenoxiden (Fe₂O₃ und FeO) und möglichst geringe Mengen an Kieselsäure, SiO₂. Tonerdezemente finden hauptsächlich Anwendung in der Feuerfest-Industrie und in der Baustoffindustrie.

Bei bekannten Verfahren zur Herstellung von eisenhaltigem Tonerdezement wird eisenhaltiger Bauxit mit bestimmten Mengen Kalkstein und gegebenenfalls mit Quarzsand gemischt und in einem geeigneten Ofen aufgeschmolzen. Der nach Abkühlen des Schmelzgutes erhaltene Klinker wird gebrochen und gemahlten. Das erhaltene Material wird allgemein auch als Tonerdeschmelzzement bezeichnet. Die Herstellung wird üblicherweise in Wannen- oder Schachtwannenöfen durchgeführt.

Aufgrund des aufwendigen Herstellungsverfahrens und der bei geringen Eisengehalten erhöhten Kosten für den Rohstoff Bauxit ist Tonerdeschmelzzement ein relativ teures Produkt.

Beim Einsatz von Tonerdezementen in der Baustoffindustrie ist eine Konstanz im Phasenbestand erwünscht, um einen kontrollierten Erhärtungsverlauf mit einer erwünschten hohen Frühfestigkeit zu erzielen. Der Drehrohrofenprozess ist wesentlich feinfühliger zu steuern als der Schmelzprozess in träge reagierenden Schachtwannenöfen, so dass die Phasenkonstanz bei der Sinterung im Drehrohrofen besser gewährleistet ist.

Dazu soll Tonerdezement einen möglichst hohen Anteil an der mineralogischen Phase Monokalziumaluminat, CaO · Al₂O₃, mit hoher hydraulischer Aktivität aufweisen. Bei der Herstellung entstehen jedoch auch Nebenphasen, wie zum Beispiel 12 CaO · 7 Al₂O₃ und Kalziumdialuminat, CaO · 2 Al₂O₃, die ebenfalls hydraulische Eigenschaften aufweisen, bei der Anwendung in Baustoffen aber Abbindezeit und rheologische Eigenschaften negativ beeinflussen. Der Massenanteil der kalziumaluminatischen Nebenphasen sollte insgesamt 10 % nicht überschreiten. Bevorzugt wird der Bereich bis zu 4 %. Der Massenanteil an nicht reagiertem Kalk, auch Freikalk genannt, sollte unter 0,5 % liegen.

Aus DE 43 30 596 A1 ist bekannt, bei eisenhaltigen Tonerdezementen durch Aufschmelzen der entsprechenden Rohstoffe und anschließende kontrollierte Abkühlung den Gehalt an 12 CaO · 7 Al₂O₃ auf niedrigem Niveau zu halten. Das Verfahren ist relativ aufwendig.

Will man eisenhaltige Tonerdezemente durch das weniger aufwendige Sinterverfahren herstellen, ergeben sich folgende Schwierigkeiten. Es muss eine Mindesttemperatur erreicht werden, bei der möglichst alles Kalziumoxid zu Kalziumaluminat durch den Sinterprozess umgesetzt wird. Es soll aber nicht die Schmelztemperatur erreicht werden.

Die Differenz zwischen diesen beiden Temperaturen wird auch als Sinterintervall bezeichnet. Eisenfreie oder eisenarme Tonerdezemente, für deren Herstellung aber sehr hochwertige Rohstoffe benötigt werden, können bei einem charakteristischen niedrigen Eisengehalt, berechnet als Fe₂O₃, von unter 6 % noch im Sinterverfahren hergestellt werden.

Eine Möglichkeit auf hochwertige Rohstoffe zu verzichten ist aus der GB-A-1 371 156 bekannt. Beschrieben ist ein Verfahren zur Herstellung von Tonerdezement durch Sintern von Aluminumkalzium-Verbindungen zusammen mit Koks in einem Drehrohrofen. Die Aluminumkalzium-Verbindungen werden dabei aus tonerdeenthaltenen Ausgangsprodukten bestehend aus Tonerdesilikaten hergestellt, die einen Eisengehalt in Form von Fe₂O₃ von bis zu 5,2 % aufweisen. Hierbei kann es sich um Abfallstoffe aus Aufbereitungs- oder Konzentrationsprozessen, Brauchsanden oder Aschen aus Kraftwerken handeln. Durch mehrere Prozessschritte werden die Aluminiumsilikate in Aluminumkalzium-Verbindungen umgewandelt und ihr Eisengehalt sehr stark reduziert. Nachteilig bei diesem Verfahren sind die aufwendigen Prozess- und Aufbereitungsschritte um die Aluminumkalzium-Verbindungen zur Zementherstellung zu erhalten.

Dagegen zeigt sich bei eisenreichen Tonerdezementen mit einem charakteristischen Eisengehalt (Massenanteil Fe₂O₃ > 6 %), dass das Sinterintervall sehr kurz ist. Bei einem Sintertemperaturniveau von ca. 1300 °C beträgt die Differenz zwischen Sintertemperatur und Schmelztemperatur nur ca. 20 °C. Damit ist der Einsatz der für die üblichen Zementherstellungsverfahren vorteilhaften Drehrohröfen kaum oder nur mit sehr großen Schwierigkeiten möglich. Beim Einsatz von Drehrohröfen zur Herstellung von eisenreichen Tonerdezementen würden sich Schmelzprozesse einstellen, die sich in diesem Aggregat kaum beherrschen lassen.

Der Erfindung liegt die Aufgabe zugrunde, das Sinterintervall von Rohmehlmischungen für die Herstellung eisenhaltiger Tonerdezemente auf bis zu 100 °C aufzuweisen und die Herstellung im Drehrohrofen zu ermöglichen.

Dies wird dadurch erreicht, dass als Sinterhilfsmittel ein Reduktionsmittel zugegeben wird.

Das Reduktionsmittel kann der Rohmehlmischung, bestehend aus Kalkkommponenten und eisenhaltiger Tonerdekomponente, zugemischt sein. Der Massenanteil an Reduktionsmittel kann bis zu 10 % betragen, vorzugsweise 1 bis 5 %.

Als Reduktionsmittel kann Kohlenstoff in handelsüblichen Formen wie Koks oder Kohlenstaub eingesetzt werden. Es können aber auch aluminiumhaltige Reduktionsmittel, zum Beispiel aus der Aufarbeitung von Aluminiumrückständen und Aluminiumschlacken eingesetzt werden.

Durch die Zugabe des erfindungsgemäßen Sinterhilfsmittels wird auch das Ausscheiden weiterer eisenhaltiger Komponenten, wie zum Beispiel Fe^{II}-Pleochroit, Wüstit, begünstigt, die als Flussmittel dienen. Außerdem kann durch das Sinterhilfsmittel thermische Energie so eingebracht werden, dass die Wärmefreisetzung kurz vor der Sinterzone erfolgt, so dass die Brennerflamme weicher gestellt werden kann und die Ansatzbildung unterbunden wird.

Durch das erfindungsgemäße Verfahren kann der Phasenbestand, insbesondere das Verhältnis 12 CaO · 7 Al₂O₃ / CaO · Al₂O₃ / CaO · 2 Al₂O₃ gezielt eingestellt werden und im Hinblick auf die Produktanwendung optimiert werden.

Die Eisenverbindungen liegen je nach Oxydationsgrad als Hämatit (α-Fe₂O₃), Maghemit (γ-Fe₂O₃), Magnetit (Fe₃O₄), Wüstit (FeO) oder als metallisches Eisen vor.

Es ist auch möglich, eisenhaltige Tonerdezemente herzustellen, bei denen die Eisenverbindungen vollständig in dreiwertiger Form vorliegen. Damit werden unkontrollierte Oxydationen und Reduktionen im Herstellungs- und vor allem im Abkühlprozess vermieden, die sich auf den Phasenbestand und die Produktqualität ungünstig auswirken können.

Die Durchführung des Verfahrens in einem Drehrohrofen ist auch deshalb vorteilhaft, weil in diesem Aggregat die Brennatmosphäre gezielt eingestellt werden kann, verbunden mit einer günstigen Einstellung der Drehofenflamme. Damit ist auch eine alternative Lösung der erfindungsgemäßen Aufgabe möglich, nämlich ohne Zugabe eines Reduktionsmittels die Rohmehlmischung in Gegenwart einer reduzierend eingestellten Ofengasatmosphäre umzusetzen. Der Einsatz von reduzierenden Atmosphären ist aus der FR-A1-2 748 271 per se bekannt. Allerdings wird dort daraufhingewiesen, dass der Einsatz einer reduzierenden Atmosphäre die Bildung von 12 CaO · 7 Al₂O₃ erhöht, was als negativ anzusehen ist.

Die Kalkkomponente kann aus Kalksteinmehl, Kalkhydrat, Branntkalk, kalkstämmigen Abfällen zur Verwertung oder Mischungen daraus bestehen. Der teilweise oder vollständige Ersatz von Kalksteinmehl kann ein günstigeres Sinterverhalten bewirken.

Die Tonerdekomponente kann auch aus Bauxiten, kalzinierten Bauxiten, Aluminiumhydroxid, Aluminiumoxid, aluminiumhaltigen Abfällen zur Verwertung oder Mischungen daraus bestehen.

Ein nach dem erfindungsgemäßen Verfahren im Drehrohrofen hergestellter eisenhaltiger Tonerdezement weist im Vergleich zu einem Tonerdeschmelzzement nach Stand der Technik folgende Eigenschaften auf:

| | Erfindung | | | Stand der Technik |
|---|---|---|---|---|
| Rohmehlzusammensetzungen | Eisenreicher Bauxit; Weißkalkhydrat und/oder Kalksteinmehl; Reduktionsmittel | | | Eisenreicher Bauxit; Kalkstein |
| Sauerstoff im Ofenabgas (Volumenanteil in %) | 0 | 2 | 5 | |
| Sinterintervall (°C) | 80 | 80 | 80 | 20 |
| typischer Phasenbestand (Massenanteil in %) | | | | |
| CA | 60 | 60 | 60 | 60 |
| C₁₂A₇ | 5 | 2 | 0 | 2 |
| CA₂ | 0 | 0 | 5 | 0 |
| C₂AS | 10 | 15 | 15 | 10 |
| C₄AF | 0 | 0 | 0 | 15 |
| FE^{III}-Oxide | 5 | 10 | 15 | 0 |
| Fe^{II}-Verbindungen | 20 | 13 | 5 | 10 - 15 |
| Freikalkgehalt (M.-%) | < 0,05 | <0,05 | < 0,05 | < 0,05 |
| FeO-Gehalt (M.-%) | 6 | 2 | 0,5 | 2 |
| gesamter Eisengehalt, berechnet als Fe2O3(M.-%) | 19 | 19 | 19 | 18 |
| Zeit bis Hydratationsbeginn (h) | 2 | 6 | 14 | 6 |

Ein charakteristischer Unterschied des nach dem erfindungsgemäßen Verfahren hergestellten Tonerdezementes im Vergleich zum Tonerdeschmelzzement, der nach dem Stand der Technik hergestellt wird, ist die Bindungsform der Eisenspezies.

Im Tonerdeschmelzzement wird das dreiwertige Fe³⁺ in der Verbindung Tetrakalziumaluminatferrit (C₄AF) gebunden. Die hydraulische Aktivität dieser Verbindung ist stark abhängig vom wässrigen Milieu (pH-Wert, Lösungsgenossen, Ionenkonzentration) und stört somit in unkontrollierter Weise das Abbindeverhalten des Tonerdeschmelzzements bzw. insbesondere der daraus hergestellten bauchemischen Produkte. Zudem wird Kalk und Aluminat am Ferrit gebunden und steht während des Produktionsprozesses nicht mehr zur Bildung von Kalziumaluminaten zur Verfügung.

Im gesinterten Tonerdezement liegen die Eisenverbindungen weitestgehend in oxidischer Form vor und reagieren nicht hydraulisch, wodurch der Störeffekt auf die Hydratation der Kalziumaluminate vermieden wird.

Die Erfindung wird im folgenden an Hand eines Ausführungsbeispiels näher erläutert:

Eine Rohmehlmischung, bestehend aus eisenreichem Bauxit, Weißkalkhydrat und Koks, wurde unter verschiedenen gezielt eingestellten Ofenatmosphären im Drehrohrofen gesintert. Für 3 Proben wurde im Vergleich zu handelsüblichem Tonerdeschmelzzement der FeO-Gehalt analysiert, der Phasenbestand röntgenographisch abgeschätzt und der Hydratationsverlauf beobachtet.

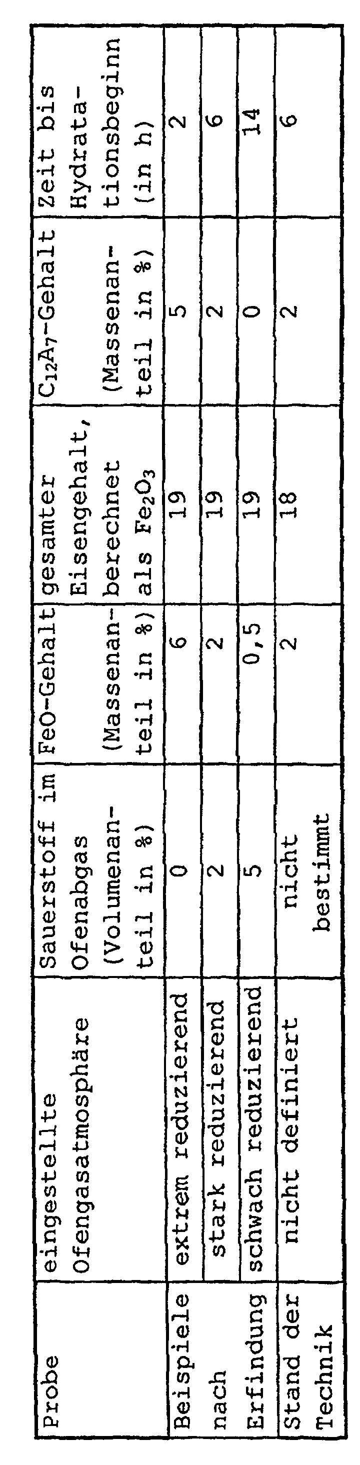

## Patentansprüche

1. Verfahren zur Herstellung von Tonerdezement mit einem Eisengehalt, berechnet als Fe₂O₃, von über 6 M.-% in einem Drehrohrofen durch Sintern einer Rohmehlmischung bestehend aus einer Kalkkomponente, einer eisenhaltigen Tonerdekomponente und einem als Sinterhilfsmittel wirkenden Reduktionsmittel.

2. Verfahren nach Anspruch 1, **dadurch gekennzeichnet, dass** eine Rohmehlmischung verwendet wird, die bis zu 10 M.-% Reduktionsmittel enthält.

3. Verfahren nach Anspruch 2, **dadurch gekennzeichnet**, das eine Rohmehlmischung verwendet wird, die 1 bis 5 M.-% Reduktionsmittel enthält.

4. Verfahren nach Anspruch 2 oder 3, **dadurch gekennzeichnet, dass** als Reduktionsmittel Kohlenstoff verwendet wird.

5. Verfahren nach Anspruch 2 oder 3, **dadurch gekennzeichnet, dass** ein aluminiumhaltiges Reduktionsmittel verwendet wird.

6. Verfahren nach Anspruch 5, **dadurch gekennzeichnet, dass** aluminiumhaltige Reduktionsmittel aus der Aufarbeitung von Aluminiumrückständen und Aluminiumschlacken verwendet werden.

7. Verfahren zur Herstellung von Tonerdezement mit einem Eisengehalt, berechnet als Fe₂O₃, von über 6 M.-% in einem Drehrohrofen durch Sintern einer Rohmehlmischung bestehend aus einer Kalkkomponente und einer eisenhaltigen Tonerdekomponente, wobei die Mischung in Gegenwart einer reduzierend eingestellten Ofengasatmosphäre umgesetzt wird.

8. Verfahren nach einem der vorhergehenden Ansprüche, **dadurch gekennzeichnet, dass** als Kalkkomponente Kalksteinmehl, Kalkhydrat, Branntkalk, kalkstämmige Abfälle oder Mischungen daraus eingesetzt werden.

9. Verfahren nach einem der vorhergehenden Ansprüche, **dadurch gekennzeichnet, dass** als Tonerdekomponente Bauxite, kalzinierte Bauxite, Aluminiumhydroxid, Aluminiumoxid, aluminiumhaltige Abfälle oder Mischungen daraus eingesetzt werden.

## Claims

1. A method for the production of aluminous cement with an iron content, calculated as Fe₂O₃, of over 6 mole-percent in a rotary tubular kiln by sintering of a raw meal mixture comprising a lime component, a ferruginous alumina component, and a reducing agent acting as a sintering aid.

2. A method according to claim 1, **characterized in that** a raw meal mixture is used which contains up to 10 mole-percent reducing agent.

3. A method according to claim 2, **characterized in that** a raw meal mixture is used which contains 1 to 5 mole-percent reducing agent.

4. A method according to claim 2 or 3, **characterized in that** carbon is used as the reducing agent.

5. A method according to claim 2 or 3, **characterized in that** an aluminous reducing agent is used.

6. A method according to claim 5, **characterized in that** aluminous reducing agents from the reprocessing of aluminum residues and aluminum slags are used.

7. A method for the production of aluminous cement with an iron content, calculated as Fe₂O₃, of over 6 mole-percent in a rotary tubular kiln by sintering of a raw meal mixture comprising a lime component and a ferruginous alumina component, wherein the mixture is reacted in the presence of an oven gas atmosphere adjusted for reduction.

8. A method according to one of the preceding claims, **characterized in that** limestone meal, hydrated lime, quicklime, wastes arising from lime, or mixtures of these are used as the lime component.

9. A method according to one of the preceding claims, **characterized in that** bauxite, calcinated bauxite, aluminum hydroxide, aluminum oxide, aluminous wastes, or mixtures of these are used as the alumina component.

## Revendications

1. Procédé de fabrication de ciment d'alumine contenant du fer, désigné comme Fe₂O₃ de plus de 6 M.-% dans un four rotatif par frittage d'un mélange de poudre brute consistant en une composante de chaux, une composante d'alumine contenant du fer et un produit de réduction agissant comme produit d'aide au frittage.

2. Procédé selon la revendication 1, **caractérisé en ce qu'**un mélange de poudre brute contenant jusqu'à 10 M.-% de produit de réduction est utilisé.

3. Procédé selon la revendication 2, **caractérisé en ce qu'**un mélange de poudre brute contenant de 1 à 5 M.-% de produit de réduction est utilisé.

4. Procédé selon la revendication 2 ou 3, **caractérisé en ce que** du carbone est utilisé comme produit de réduction.

5. Procédé selon la revendication 2 ou 3, **caractérisé en ce qu'**un produit de réduction contenant de l'aluminium est utilisé.

6. Procédé selon la revendication 5, **caractérisé en ce que** des produits de réduction contenant de l'aluminium issus du recyclage de résidus d'aluminium et de scories d'aluminium sont utilisés.

7. Procédé de fabrication de ciment d'alumine contenant du fer, désigné comme Fe₂O₃ de plus de 6 M.-% dans un four rotatif par frittage d'un mélange de poudre brute consistant en une composante de chaux et une composante d'alumine contenant du fer, le mélange étant transformé en présence d'une atmosphère gazeuse du four réglée pour la réduction.

8. Procédé selon une des revendications précédentes, **caractérisé en ce que** de la poudre de calcaire, de la chaux hydratée, de la chaux vive, des déchets de calcaire ou des mélanges de ces derniers sont utilisés.

9. Procédé selon une des revendications précédentes, **caractérisé en ce que** de la bauxite, de la bauxite calcinée, de l'alumine hydratée, de l'oxyde d'aluminium, des déchets contenant de l'aluminium ou des mélanges de ces derniers sont utilisés.
